(19) Europäisches Patentamt
European Patent Office
Office européen des brevets

(11) **EP 3 887 574 B1**

(12) **EUROPEAN PATENT SPECIFICATION**

(45) Date of publication and mention
of the grant of the patent:
**22.11.2023 Bulletin 2023/47**

(21) Application number: **19835719.6**

(22) Date of filing: **29.11.2019**

(51) International Patent Classification (IPC):
**C25B 1/04** $^{(2021.01)}$      **A23C 3/00** $^{(2006.01)}$
**C02F 1/467** $^{(2023.01)}$      **C25B 9/17** $^{(2021.01)}$

(52) Cooperative Patent Classification (CPC):
**A23C 3/00; C02F 1/467; C25B 1/04; C25B 9/17;**
C02F 2201/46135; C02F 2303/04; Y02E 60/36

(86) International application number:
**PCT/IB2019/060320**

(87) International publication number:
**WO 2020/110078 (04.06.2020 Gazette 2020/23)**

(54) **METHODS AND DEVICES FOR USING THE PROPAGATION OF ELECTRICAL CHARGES BY IMPACTS BETWEEN WATER MOLECULES IN AN ELECTROLYTIC CELL CONTAINING WATER AND IONIC COMPOUNDS**

VERFAHREN UND VORRICHTUNGEN ZUR VERWENDUNG DER AUSBREITUNG ELEKTRISCHER LADUNGEN DURCH STOSSEINWIRKUNGEN ZWISCHEN WASSERMOLEKÜLEN IN EINER ELEKTROLYTISCHEN ZELLE MIT WASSER UND IONISCHEN VERBINDUNGEN

PROCÉDÉS ET DISPOSITIFS D'UTILISATION DE LA PROPAGATION DE CHARGES ÉLECTRIQUES PAR IMPACTS ENTRE DES MOLÉCULES D'EAU DANS UNE CELLULE D'ÉLECTROLYSE CONTENANT DE L'EAU ET DES COMPOSÉS IONIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.11.2018 IT 201800010675**

(43) Date of publication of application:
**06.10.2021 Bulletin 2021/40**

(73) Proprietor: **Multim S.r.l.**
**20151 Milano (MI) (IT)**

(72) Inventor: **ANTOLINI, Claudio**
**20151 Milano MI (IT)**

(74) Representative: **Concone, Emanuele**
**Società Italiana Brevetti S.p.A.**
**Via Carducci 8**
**20123 Milano (IT)**

(56) References cited:
**WO-A1-2012/127423      DE-U1-202011 109 840**
**US-A- 1 597 553          US-A1- 2013 088 184**
**US-A1- 2016 236 955      US-A1- 2017 058 411**
**US-B2- 7 691 324**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention concerns methods and devices to exploit the kinetic energy of impacts between water molecules and the electrodes of an electrolytic cell, to increase the efficiency of electrolysis processes and to propagate electrical charges in the liquid, when the liquid in which the electrodes are inserted is formed by water and ionic compounds.

It is well known that the reactions that take place in an electrolytic cell require more amperes than those foreseen by the theory: this extra current is generically defined as *leakage current* and its origin, according to current knowledge, is attributed to a concausation of factors that have to do with the type of elements present in the solution, the type of electrodes and possible intermediate chemical reactions, but since these phenomena are not easily distinguishable from each other and in any case their impact on the electrolytic process itself is marginal, they have been little investigated even by theory.

The method and the devices object of the present invention derive from the discovery that the fundamental component of the so-called *leakage currents* in the electrolytic cells containing a water-based liquid is actually a natural and spontaneous behaviour of water, which results to be the indispensable trigger of the electrolytic reaction and which allows its continuous functioning.

This phenomenon is an ever-present physical characteristic that by its nature cannot be eliminated, so that all the electrolytic cells with water-based liquids, however made, suffer the effect.

The theory that explains the functioning of the physical phenomenon is able to justify in detail also the common and sometimes contradictory experiences of open and closed circuit electrolytic cells.

The evidence and description of this physical phenomenon allow to realize devices that make possible the use and exploitation of this specific characteristic of water, independently from the normal and known electrolytic process that could be generated.

In particular, we intend to use this property for three devices: an electrolytic cell in which the efficiency of the process is greater on one pole than the other; an electrolytic cell in which the electrolytic reaction occurs only on one electrode; an electrolytic cell that generates a continuous and intense propagation of electrical charges throughout the liquid without the liquid having to undergo significant chemical transformations, so as to be able to cause the destruction of bacterial populations present in the liquid.

In order to understand the degree of innovation of the present invention a simple experiment able to highlight the phenomenon is described. The experiment, given the simplicity of the device and of the materials that can be used, is always repeatable and the exposed results always measurable. Some vaguely related prior art documents include US1597553 or US2017/058411.

**1 - Evidence of the phenomenon**

In a container of non-conductive material filled with water and ionic compounds, insert two equal electrodes E1, E2 made of the same conductive material and each with the same wetted surface, such that no spontaneous chemical reactions are created between the electrodes and the compounds present in the liquid. For example, for the experiment, pour 100 ml of a 0,9% sodium chloride solution into the container and insert two graphite electrodes with a wetted surface of 3 cm$^2$ each at a distance of 10 cm between them.

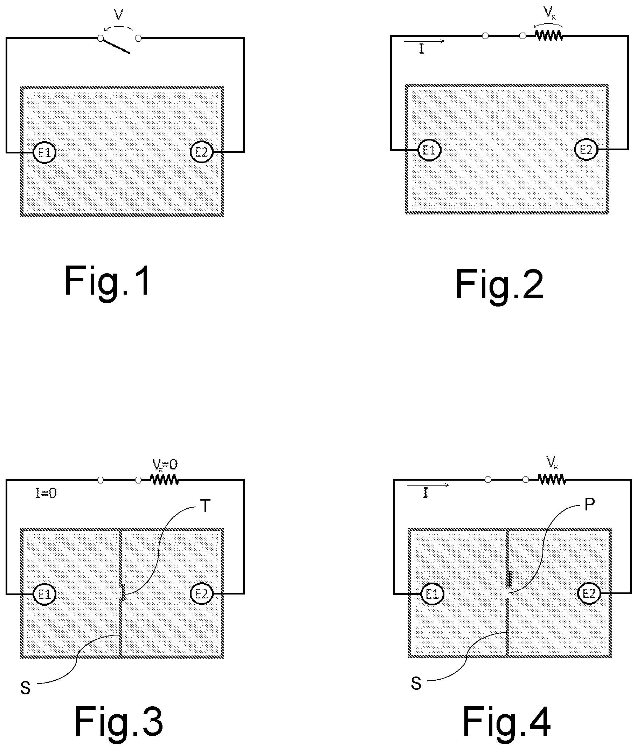

If we measure with a voltmeter the voltage between electrodes E1, E2 we always find a voltage different from zero, of the order of tens of millivolts, which over time tends to settle on a value V (Fig.1). If electrodes E1, E2 are connected to each other by means of an electrical circuit with a resistor, external to the liquid, there is always a passage of electrical charges between the two electrodes as shown by the measurement of the voltage $V_R$ at the ends of the resistor (Fig.2). The amount of charges that are transferred from one electrode to the other decreases continuously during the time in which the circuit is closed, and during some experiments in which the circuit has been closed even for days there has always been found a current value I of at least some microamperes.

Opening the circuit for a few seconds and then closing it again, there is a repetition of the phenomenon and this happens cyclically every time the sequence is repeated. Depending on the size of the electrodes, the intensity of the initial current varies from milliamperes to microamperes. The longer the time interval between one closure and another of the circuit, the closer the initial current returns to the value it had in the previous cycle, although the direction of the current may vary from one closure to another. If the electrodes are of the same material but of different size and/or shape, there is an increase in the value of the initial current flowing between the electrodes when the circuit is closed.

Now suppose to insert in the container a baffle S of insulating material in order to separate the liquid in two isolated zones with an electrode in each zone (Fig.3). In this case, there is no longer any measurable voltage between electrodes E1, E2 and there is no movement of charges in the closed circuit ($V_R$=0, 1=0). If baffle S includes a "plug" T that can be opened on command in order to obtain a passage P (Fig.4) that allows to restore a path in the liquid between the two electrodes E1 and E2, it is noted that the phenomenon of voltage and current always reappears every time the plug T is opened.

This experiment shows unequivocally that for there to be a transfer of charges in the circuit outside the liquid there must necessarily be also a similar transfer of charges in the liquid between one electrode and the other, and that when this "circuit in the liquid" is interrupted the phenomenon cannot occur. On the other hand, also all systems that produce electrolysis in a water-based liquid stop working immediately when one electrode does not have a path in the liquid towards the other electrode.

Considering the fact that in the closed circuit a current circulates even in the absence of energy supplied from outside, but that by construction of the experiment no known chemical reactions can be spontaneously generated between the electrodes and the compounds of the liquid, it is difficult to think that the electrical charges on the electrodes are supplied and fed by the ions and their movement towards the electrodes. In fact, the value of the spontaneous voltage between the electrodes is much lower than the threshold value $V_{threshold}$ defined as the minimum value of potential difference (p.d.) necessary to have the electrolysis (decomposition potential of the electrolytes also indicated below as "threshold p.d." B).

Therefore, the spontaneous voltage cannot generate an electric field around the electrodes suitable for moving an ionic mass in the liquid, and even more so cannot generate a significant electric field between the electrodes because of their distance. As further confirmation of the impossibility for the ions to supply the electrons necessary for the current circulating in the circuit, consider that the electrodes are made of the same material, of the same size and immersed in the same liquid, therefore, even if we want to hypothesize the occurrence of unknown spontaneous chemical reactions between ions and electrodes, in order to have a current circulation in the external circuit it is necessary that on one electrode a chemical oxidation reaction takes place and at the same time on the other electrode a chemical reduction reaction takes place. Since they are absolutely identical electrodes, it is very unlikely that the same liquid with which they are both in contact can produce simultaneously opposite chemical reactions.

## 2 - Explanation of the phenomenon

The following explanation of the phenomenon describing the behaviour of water molecules is proposed, valid for electrolytic processes and galvanic cells with water-based solutions.

Initially the electrodes are immersed in the liquid and are not connected to each other by an external electrical circuit. The water molecule is polarized and the negative polarity zone, centered on the oxygen atom, is at least twice as large as the positive polarity zone. When, due to thermal agitation, a water molecule comes into contact with the electrode, it can then impact against the electrode surface with its negative polarity part (more frequently) or with its positive polarity part.

If the molecule hits the surface of the electrode with its negative polarity part, it may transfer one or more electrons because the electrons more easily extractable from a water molecule are located in the outer, higher energy orbitals (HOMO orbitals), which in the case of water are located essentially on the oxygen atom and are the two non-bonding doublets thereof. If, on the other hand, the molecule hits the surface of the electrode with its positive polarity part, the transfer or capture of electrons is unlikely for the above reason.

Also the ions present in the solution could impact the surface of the electrode and possibly transfer or capture electrons but their effect is negligible, both because the ions are present in a much smaller number than the water molecules and because the ions are surrounded by oriented water molecules and therefore to obtain an impact with the electrode an electric field is needed whose attraction force allows the ion to overcome the resistance of the barrier of water molecules between it and the electrode.

The water molecules that hit the surface of the electrode with the negative polarity part have transferred one or more electrons of their own electrons to the electrode and consequently have become "positive", presumably modifying also their structure (for simplicity of exposure from here on it is assumed that a molecule transfers only one electron). These "positive" molecules, which are not defined ions to distinguish them from the ions traditionally called and actually present in the liquid (such as derivatives of salts, acids, bases, ionized atoms), in the following will be indicated for brevity with the symbol $M_{water}^{+}$.

These molecules, after the impact against the electrode, may have a trajectory that moves them away from the surface of the electrode and that leads them to impact other adjacent water molecules. The collision between an $M_{water}^{+}$ molecule and a normal water molecule can allow the former to take an electron from the latter so that the former returns to normal and the latter becomes $M_{water}^{+}$. It can therefore be assumed that the molecule $M_{water}^{+}$ can propagate in the liquid in all directions according to a random motion.

The propagation by impact in the immediate vicinity of the electrode is, however, influenced by the negative electric charge present on the electrode due to the electronic exchange that has just occurred. So there is a high probability that a sequence of impacts brings an $M_{water}^{+}$ molecule against the electrode to take back the electron, and there is a low probability that an $M_{water}^{+}$ molecule can move away from the electrode's field of attraction. The probability of leaving the electrode's area of influence increases significantly if there is an electric field disruptor in the immediate vicinity of the electrode, i.e. an ion that can allow more $M_{water}^{+}$ molecules to escape from the electrode's attraction field by altering the electric field. By the way, this is the reason why, as is experimentally known, pure water electrolysis cannot be obtained: $M^+_{water}$ molecules cannot escape the electrode and since they cannot reach the other electrode they do not close the "circuit in the liquid".

In case ionic compounds are present in the liquid, we can therefore say that due to the successive impacts between water molecules the positive electric charge carried by the $M^+_{water}$ molecule can be everywhere in the liquid. So it can happen that, after a time determined by the number of impacts between molecules, an $M^+_{water}$ molecule can hit the surface of the electrode again, taking back the lost electron and returning to normal.

The continuous exchange of electrons between water molecules and electrode can generate at a time *t* an accumulation of N electrons on the electrode with charge *q*=N*e*, which are distributed on the surface of the electrode, while at the same time N molecules $M^+_{water}$ are formed in the liquid. The overlapping of these processes over time leads each electrode to reach and oscillate around its own equilibrium condition, not necessarily equal to that of the other electrode, which depends on time, on the concentration of ionic compounds present in the immediate vicinity of the electrode and on the material, size and positioning of the electrode.

Considering that the same phenomena act on two electrodes identical in size and material, it can be considered that the number of impacts is on average the same for both electrodes, so that the negative electric charge on the two electrodes will be on average the same but, given the large number of impacts, it will certainly not be equal instant by instant. Therefore, when the electrodes are connected to each other at time t, by means of an electric circuit external to the liquid, one electrode will contain more charges than the other, which will result in a flow of electrons from one to the other with the intention of equalizing the electric potential of the two electrodes.

This transfer of electrons is therefore generated by the asymmetry in the system so that, for example, electrode E1 that has more electrons than electrode E2 is negative compared to E2 and therefore tends to give it the excess electrons. However, at the time *t* when E1 transfers electrons it becomes "positive" with respect to its equilibrium point, that is with respect to the liquid that surrounds it, and E2 that receives the electrons becomes "negative" with respect to its equilibrium point. The deviation from the equilibrium point is the motor of the spontaneous phenomenon, because it induces a preference on the type of impacts that can occur between the electrode and the water molecules that surround it.

At time *t* the liquid adjacent to electrode E1 sees it as "positive", and therefore there is an increase in the probability of a water molecule hitting the electrode with its negative polarity zone, thus transferring an electron to electrode E1 and generating at the same time an $M^+_{water}$ molecule.

At time *t* the liquid adjacent to electrode E2 sees it as "negative", and therefore there is a reduction in the probability of a water molecule hitting the electrode with its negative polarity zone, because the intensity of the electric field near the surface is able to change the trajectory of the molecule before the impact by rotating the part of the molecule with positive polarity towards the electrode surface. In addition, there is an increase in the probability that an $M^+_{water}$ molecule can be attracted towards electrode E2, from which it will rip the electron necessary to return to neutral.

In practice, at time *t* electrode E1 behaves as a *"generator"* of electrons and $M^+_{water}$ molecules while electrode E2 behaves as a *"consumer"* of electrons and $M^+_{water}$ molecules. However, the flow of electrons between electrodes E1 and E2 occurs by means of an electric conductor while the positive charge moves in the liquid through the impacts between the molecules, therefore the speed of transfer of the negative charge is many orders of magnitude higher than that of the positive charge. It is therefore possible to consider the transfer of electrons in the electric circuit as immediate compared to the displacement of charges in the liquid.

Consequently, as soon as the two electrodes are connected to each other through the external circuit, i.e. at time *t*, the electrons move immediately from E1 to E2, and at time *t+1* the impacts on electrode E1 generate new electrons that are immediately transferred to electrode E2, which in the meantime has consumed the electrons arrived from E1 at time *t* transferring them to the $M^+_{water}$ molecules already present in the liquid. This event restores the difference in charge between the two electrodes, making E1 again negative compared to E2 and allowing a continuous flow of electrons from E1 to E2 that lasts until the $M^+_{water}$ molecules already present in the liquid are exhausted. This mechanism explains the transfer of charges from E1 to E2 through the external circuit.

From this moment on it happens that when the *generator* electrode E1 acquires an electron creating the $M^+_{water}$ molecule, the external circuit moves the electron to the *consumer* electrode E2 before the $M^+_{water}$ molecule has arrived on E2 to neutralize it. In the meantime, electrode E1 is able to acquire a new electron and creates a new molecule $M^+_{water}$, but this new electron cannot be sent to E2 because E2 has the same charge as E1 that has not yet neutralized the previous electron due to lack of $\mathrm{M}^+_{water}$ molecules. Therefore, the *generator* electrode E1, having to hold the new electron on itself, decreases its "positivity" with respect to the adjacent liquid, thus decreasing its ability to generate new $\mathrm{M}^+_{water}$ molecules. This mechanism explains the weakening of the current passage during the closed circuit period.

When the electrical connection between the electrodes is interrupted, the system tends to return spontaneously to the initial equilibrium conditions because in the liquid the ionic compounds tend to diffuse homogeneously pushed by the concentration gradient. This mechanism explains why the subsequent electrical connection between the electrodes will lead to the same operation.

In the light of the above, the amount of the initial flow and the direction of flow of the charges in the circuit depend on the situation present on each electrode at the moment of closing the circuit. Therefore, each closing cycle will have the same operation but the starting values may be different from time to time as well as the direction of flow of the electric charges. By changing the shape and size of one of the electrodes it is possible to increase the probability that the direction of the current will remain stable between one cycle and another.

The theory explained here proposes to integrate the current knowledge that the displacement of electrical charges within an aqueous solution, either of an electrolytic cell or galvanic cell or battery, is due only to the movement of ions towards the anode and cathode due to the attraction of the electric field in the immediate vicinity of the electrode (migration), due to the effect of the concentration gradient as you move away from the electrode (diffusion) and to the convective movement and the simultaneous constant presence of leakage currents.

The explanation of the operation of the devices object of the present invention is based on the demonstration that the electrical conductivity of the liquid always has a component due to the presence of charges carried by water molecules $\mathrm{M}^+_{water}$ that are generated by impact and that move in the liquid through impacts/interactions with other water molecules.

### 3 - The theory applied to the electrolytic cell

The above theory provides an explanation of the triggering of an electrolytic process.

Consider the configuration of the previous experiment, with electrode E1 connected to the positive pole of an electric battery and electrode E2 to the negative pole. When a p.d. sufficient to initiate electrolysis is applied to the electrodes, the battery makes electrode E1 positive with respect to the liquid adjacent thereto and electrode E2 negative with respect to the liquid adjacent thereto.

For what has been exposed so far, electrode E1 becomes the *generator* of $\mathrm{M}^+_{water}$ molecules and the electrons given to electrode E1 are immediately transported to the positive pole of the battery, while electrode E2 becomes the *consumer* of $\mathrm{M}^+_{water}$ molecules that neutralize the electrons present in the negative pole of the battery. As long as the battery is able to immediately remove from electrode E1 the electrons due to the generation of $\mathrm{M}^+_{water}$, E1 will continue to form $\mathrm{M}^+_{water}$ molecules without the process slowing down and allowing an increasing flow of charges in the circuit connected to the battery.

At start-up, the $\mathrm{M}^+_{water}$ molecules carry the totality of electrical charges with the maximum intensity established by the system configuration (battery, electrode size and distance between them, ion concentration), and as the intensity of the current increases, the number of electrical charges that at a given instant $t$ are on the surface of the electrode also increases. These charges generate an electric field around the electrode, which in turn is gradually increasing, which extends into the liquid in the immediate vicinity of the electrode and influences the behaviour of the ions present: the ions of the same sign are pushed away while, as soon as a certain value of the electric field is exceeded, the ions of the opposite sign present in the adjacent liquid undergo a force of attraction such that they can overcome the barrier of oriented water molecules surrounding them and hit the electrode, thus initiating the electrolysis process proper.

The $\mathrm{M}^+_{water}$ molecules therefore constitute the "starting engine" of all the electrolytic processes that take place in water-based ionic solutions, because if there was not the mechanism of molecular transport of water, the ions present around the electrodes would not be able, on their own, to carry on the electrode the amount of charge necessary to create the electric field itself. In fact, in open circuit, on the terminals of a battery there are only "few" electrical charges, several orders of magnitude less than when a current begins to flow, regardless of the value of the applied p.d.. If an electrode immersed in the liquid is connected to the battery terminal, even the electrode will have few electrical charges that generate in the liquid an electric field absolutely insufficient to attract the number of ions necessary to start the electrolysis process.

The intensity of the current circulating in the external circuit is therefore given by:

$$\mathrm{A}_{total} = \mathrm{A}_{water} + \mathrm{A}_{ions}$$

where $A_{ions}$ is the contribution of the normal electrochemical reaction and $A_{water}$ is the contribution of charges provided by the molecular transport of water. At start-up, the value of $A_{total}$ is maximum and is formed only by $A_{water}$ while with the continuation of the process the $A_{total}$ value drops, because the value of $A_{water}$ drops drastically and the value of $A_{ions}$ starts to increase. Under steady conditions, the system finds its equilibrium point with the maximum $A_{ions}$ value and a minimum $A_{water}$ value.

Once the electrolytic process has started, in order to maintain it, it is necessary that there are always useful ions in the significant range of the electric field, therefore the ions consumed by the electrolytic reaction must be replaced by others who must take their place. In order to approach the electrode, the ions move in the liquid by diffusion pushed by the concentration gradient, i.e. there is the movement of a physical mass that must open a path in the middle of other masses, therefore the speed of the ion in the liquid is limited by the characteristics of the ion and the liquid. The speed at which the replacement ions go to a point where they can touch the electrode determines the maximum $A_{ions}$ of the cell.

On the positive electrode, the electric field moves away the negative ions and in doing so reduces the number of $M_{water}^+$ molecules that can be released into the liquid, so the $A_{water}$ is reduced. The value of $A_{water}$ cannot be reduced to zero because if this were to happen, e.g. by isolating the electrodes from each other via baffle S in the cell, the electrolytic process would stop instantly.

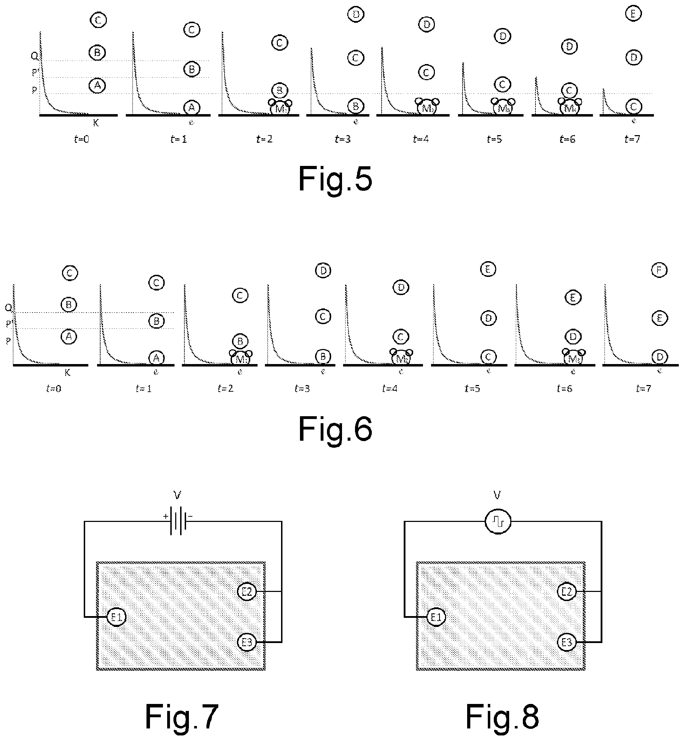

In fact, let's hypothesize absurdly that the electrochemical reaction is maintained under steady conditions only due to the contribution of the electrons supplied by the ions: in Fig.5 there is represented with K one of the countless points of contact with the liquid that the surface of the electrode has and on which at each unit of time there is a contact with the molecules of the liquid, and in the lateral diagram there is shown schematically the electrostatic force that the charges present on the electrode exert in the liquid.

At time $t=0$ a sequence of ions A, B, C, D, E are initially positioned in a line perpendicular to surface K and equidistant from each other, being separated by polarized water molecules M.

After the first unit of time ($t=1$), ion A, which is subject to the force of the electrostatic field, gets into contact with the electrode in K moving with velocity $v_A = v_{diffusion} + a_P \cdot \Delta t$, where $a_P$ is the acceleration impressed by the electric field at the distance P from point K. The replacement ion B moves towards P instead with velocity $v_B = v_{diffusion} + a_Q \cdot \Delta t$, where $a_Q$ is the acceleration impressed by the electric field at the distance Q>P from point K, therefore $a_Q < a_P$ and consequently $v_B < v_A$. This implies that, in the first unit of time, ion A arrives in K and gives an electron $e$ to the electrode, but ion B cannot reach the distance P but only the distance P'>P.

At time $t=2$ point K of the electrode cannot therefore be touched by ion B, which does not have a sufficient velocity to reach it in the second unit of time, and is therefore hit by a water molecule $M_1$ that hypothetically does not exchange electrons with the electrode. If this happens simultaneously at both electrodes, less current passes through the circuit and therefore the amount of charge on the electrodes and consequently the intensity of the electric field is reduced.

At the time $t=3$ ion B reaches point K and gives an electron $e$ to the electrode, but ion C, subject to a lower electric field than the previous one, is still far away from point K leaving therefore for three units of time ($t=4$, $t=5$, $t=6$) the impact with K to water molecules $M_2$, $M_3$, $M_4$ that do not exchange electrons. The result is a reduction of the current circulating in the circuit and therefore of the quantity of charge instantaneously present on the electrode and consequently of the electric field, as indicated by the relative lateral diagram. This mechanism leads in short to a continuous decrease of the charges present on the electrode, which therefore no longer manages to attract the ions necessary to feed the electrolysis process.

Consider instead the case in which the water molecules M can exchange an electron $e$ during the impact with the electrode as shown in Fig.6, where it can be noticed that the electric field at steady state does not vary and therefore the attraction on the ions remains constant allowing the maintenance of the electrolytic transformations.

In fact, as for the previous case, at time $t=0$ the same sequence of ions A, B, C, D, E appears in front of point K and at time $t=1$ ion A arrives in K and ion B in P'. At time $t=2$ ion B has not reached K, which is therefore hit by a molecule of water $M_1$ that however exchanges an electron $e$ with the electrode allowing therefore to maintain in the circuit the same circulating current and therefore the quantity of charge instantaneously present on the electrode, and consequently also the electric field remains unchanged.

From this moment on, all the following ions B, C, D, E, F will always be subject to the same attractive force and will therefore have a similar approach to K, as shown schematically in the figure. In fact, even if an ion requires two time units to get in contact with K ($t=3$, $t=5$, $t=7$), after the first of said two time units it is the water molecule $M_1$, $M_2$, $M_3$ that exchanges an electron $e$ with the electrode ($t=2$, $t=4$, $t=6$).

This example also explains the known increase of leakage currents in proportion to the p.d. applied to the electrodes, and why the yield and the efficiency of an electrolysis process are better for p.d. just above the threshold value $V_{threshold}$. In fact, considering that the electrode is immersed in the liquid and that at each point of contact there is an impact with either a water molecule or an ion, and that in aqueous solutions water is always present to a greater extent than ions in solution, it follows that in any electrolytic process in aqueous solutions the impact between the electrodes and the water molecules cannot be avoided.

When the threshold value $V_{threshold}$ is reached, there is started the current $A_{ions}$ that "consumes" the ions that hit the electrode and are replaced thanks to the concentration of the ions in the liquid that diffuse towards the electrode. When the p.d. is increased, more and more ions are attracted towards the electrode but the ions closer to the electrode are attracted faster and faster than those further away because the force of attraction of the electric field follows the reciprocal of the square of the distance. Consequently, the velocity at which ions are replaced near the electrode depends not only on the concentration of the ions and the physical displacement of the ion mass in the liquid, but also on the fact that the force of attraction of the electric field acts more near the electrode and marginally at the limits of the electric field.

Since if no ions are present the impact occurs with water molecules, and the generation of $M_{water}^+$ molecules increases with the increase of the electric field, the magnitude of the molecular transport $M_{water}^+$ increases with the increase of the current circulating in the circuit. However, this growth is not linear because the quadratic component of the electric field attraction force is present.

In the electrolytic cell taken for example, but more generally for all the electrolytic cells of water-based solutions, it can be observed that by disconnecting the electrodes from the battery terminals and immediately inserting a voltmeter a p.d. of a little less than the one supplied until a moment before by the battery is measured between the electrodes, and that this p.d. spontaneously and slowly decreases towards a minimum value of the order of tens of millivolts. If then, after having disconnected the electrodes from the battery, the electrodes are short-circuited between them, a current of opposite direction and of initial intensity slightly lower than the one circulating with the battery connected is measured, and said current very quickly decreases to almost zero and at the same time the voltage between the electrodes reaches the minimum value.

This last phenomenon is explained by the fact that as soon as the electrodes of the electrolytic cell are connected to the battery, $M_{water}^+$ molecules start to form on the positive electrode. These $M_{water}^+$ molecules produce the transport of the positive charges in the liquid not through the displacement of the molecular mass but through the transfer of the charge to an adjacent molecule. The path of the positive charge generated by the positive electrode towards the negative electrode is therefore random and does not follow the shortest line between the two electrodes, therefore before the first positive charge produced impacts the negative electrode many others have already been produced and are randomly distributed in the liquid.

The liquid thus acts as a "reservoir" of positive charges that fills up as the electrolysis continues. It should be noted that this "reservoir" is able to be constantly increased during cell operation because the positive electrode generates more $M_{water}^+$ molecules than the negative electrode can absorb, for statistical reasons.

In fact, the normal water molecule has a slightly positive zone in correspondence of the hydrogen atoms and a negative zone in correspondence of the oxygen atom, therefore in front of the positive electrode it spontaneously tends to dispose itself showing to the electrode its negative zone, i.e. that relative to oxygen. This is exactly the most favourable zone to exchange the electron with the electrode and generate the molecule $M_{water}^+$, while in front of the negative electrode there is a molecule of water $M_{water}^+$ which is all positive and therefore it is not arranged according to a preferred direction. The probability that a normal water molecule impacting against the positive electrode gives an electron to the electrode is therefore greater than the probability that an $M_{water}^+$ molecule impacting against the negative electrode takes an electron, therefore the *generator* electrode produces more charges than the *consumer* electrode is able to consume.

When the electrodes are disconnected from the battery and short-circuited between them, there is a current flow in the circuit between the electrodes because at the moment of disconnection from the battery the electrode that was connected to the positive terminal is seen as "negative" by the surrounding liquid, and vice versa for the other electrode. Therefore, for the reasons already illustrated above, there is a current circulation in the opposite direction with respect to when the electrodes were connected to the battery, and the current intensity has an initial peak because the events that occur at the electrodes can immediately exploit all the positive charges already present in the "reservoir".

This behaviour, present in all electrolytic cells with water-based solutions, is a further demonstration of the validity of the theory of charge transport by $M_{water}^+$ molecules which is able to explain a phenomenon otherwise difficult to explain. In fact, it is very unlikely that this consistent and measurable current flow can be generated by the electrons exchanged by the ions, since the chemical reactions on the electrodes should not only be reversed but also, in the absence of a generator, they should be transformed from induced reactions to spontaneous reactions making the electrolytic cell a battery, even if for a few seconds.

As a consequence of the fact that there is a "reservoir" in which the positive charges have accumulated, it is evident that if the electrodes are removed from the liquid the positive charges, having no conductive surfaces with which to exchange electrons to the outside, should remain indefinitely in the liquid itself.

In the electrolytic cell used as an example, numerous tests were carried out in which the cell was brought to the same initial conditions and then the electrodes were removed from the liquid and re-inserted short-circuited between them after a certain period of time, in order to measure the current flowing between them. The measurements showed that the longer the liquid remained at rest, the lower the initial current peak in the circuit.

This result means that the number of positive charges present in the liquid decreases over time, because in fact the $M^+_{water}$ molecules have the possibility to exchange electrons with the oxygen molecules present in the air in contact with the surface of the liquid. When the same test was carried out by immediately closing the container with an insulating lid, it was found that the initial peak was always higher than the analogous experiment without a lid, and the more effective the isolation between liquid and air, and all the more so if a vacuum is created over the liquid, the greater the quantity of charges that can be stored in the liquid over time.

**4 - Optimization of the efficiency of chemical transformations on one pole of an electrolytic cell**

Consider the electrolytic cell of Fig.7 composed by an insulating container filled with an aqueous ion solution in which are immersed on one side an electrode E1 connected to a first pole and on the other side two separate electrodes E2 and E3, equidistant from E1, connected to a second pole, all the electrodes being substantially identical in shape, material and dimensions. Just for simplicity of explanation we illustrate the effects of the theory considering electrode E1 connected to the positive pole of a battery but, with similar reasoning and considerations, we arrive at the same results even if electrode E1 is connected to the negative pole.

Connect electrode E1 to the positive pole of a battery and the other two electrodes E2, E3 to the negative pole and apply a p.d. V equal to twice the threshold p.d. B necessary to start and maintain the electrolytic process if the electrodes used were only E1 and E2.

For obvious reasons of symmetry of the system, the current $A_{total}$ flowing in the circuit entirely crosses E1 while it is equally divided between E2 and E3. Obviously, current $A_{total}$ is the same as if only electrodes E1 and E2 were present in the cell, in fact the efficiency of electrode E1 cannot, with the same p.d. V., be greater than it would be if only one electrode were in front of it.

What constitutes an object of the present invention is instead the capacity of electrodes E2 and E3, in this configuration, to provide a higher efficiency because, with the same $A_{total}$, the $A_{ions}$ component increases and the $A_{water}$ component decreases compared to the case of a single negative electrode U of double the size of E1. The explanation for this behaviour is given by the fact that the current circulating in the circuit is equally divided between electrodes E2 and E3, so if the amount of charge present at a given instant on electrode E1 is $q$ on each electrode E2 and E3 we will have a charge amount equal to $q/2$.

If instead of E2 and E3 there was only one negative electrode U, on it there would be the amount of charge $q$ and since the distribution of charges on the electrode is not necessarily homogeneous, but rather it is very easily asymmetrical since, according to common experience, the consumption of the electrodes is not homogeneous, such an asymmetrical superficial distribution of charges would bring the electric field around a superficial zone of electrode U to be similar to that of electrode E1. Whereas, if there are two negative electrodes, whatever the asymmetry in the superficial distribution of charges this will generate on E2 and E3 at most an electric field of intensity equal to half of the intensity of the one present on the only positive electrode E1.

The electric field generated on E1 is greater than the field generated on E2 and E3, and as previously illustrated a smaller electric field consumes less quickly the ions, which have more time to diffuse in the area of the electric field, so E2 and E3 need less molecular transport to maintain the process. In other words, with classical terminology, leakage currents are reduced on electrodes E2 and E3.

Obviously, the same reasoning applies to any X number of multiple electrodes connected to the second pole, since it is sufficient that a p.d. V equal to X times the threshold p.d. B, as defined above, is applied to the poles, so that the electrical charge on each of the multiple X electrodes is sufficient to start the electrolytic process.

**5 - Electrolytic cell in which the electrolytic transformation takes place only on one electrode**

Consider again the electrolytic cell of Fig.7, but this time apply a p.d. V equal to the threshold p.d. B necessary to start and maintain the electrolytic process if the electrodes used were only E1 and E2.

In this case, for the above reasons, the electric field generated by each negative electrode E2, E3 around its surface is half the one necessary to start the electrochemical reaction. As a consequence, according to the state of the art, no exchange of electrons between ions and electrodes should occur and the operation of the electrolytic cell would not be possible.

Surprisingly, in several tests easily reproducible using for example a saline solution and graphite electrodes, the inventor has always found, on the contrary, that on electrode E1 the expected chemical transformations take place and in the circuit flows a current $A_{total}$ exactly the same as if only electrodes E1 and E2 were immersed in the cell, even if on electrodes E2 and E3 the effects of electrochemical reactions do not appear.

This unexpected behaviour, which can always be verified with simple measuring instruments, can be explained by what has been disclosed so far: on electrode E1 the expected electrochemical reaction starts and at the same time the $M^+_{water}$ molecules are generated which are produced in greater number than the charges that can be consumed on E2 and E3. This determines that only electrode E1 is able to feed and maintain the circuit in operation even without the ionic contribution on E2 and E3. The use of this device is advantageous in all cases where you want to obtain the electrolytic reaction only on one electrode, or when you want to preserve one between anode or cathode from corrosion or electrolytic consumption.

With the same criterion it is possible to obtain the electrolytic reaction on electrode E1 only even by applying a greater p.d. provided that to the pole opposite to E1 further equal electrodes are added, always equidistant from E1, on which the circulating current can be divided so that the electric field generated by each multiple electrode around its surface is always lower than the one necessary to start the electrochemical reaction thereon.

Defining X the number of multiple electrodes, all substantially equal to each other and equidistant from E1, which are connected to the pole opposite to E1, to obtain the electrolytic reaction only on E1 it is sufficient that the generator applies to the poles a p.d. V lower than X times the threshold p.d. B, being X≥2, i.e. B≤V<X*B. To this purpose, the generator is equipped with a voltage regulator to regulate the generated potential difference (V) at least over the entire range between B and X*B.

However, in practical application, as the value of X increases the current circulating on each multiple electrode gets closer and closer to the threshold value that triggers the electrolytic process, and small impurities present in the electrodes or small differences in the concentration of the ion solution could cause some of these electrodes to exceed the threshold value triggering electrolysis thereon. To prevent undesired initiation of the electrolytic process on the X multiple electrodes connected to the pole opposite to E1, a safety margin should be maintained and therefore the generator should apply to the poles a potential difference V not exceeding 0,85*X times the threshold p.d. B, i.e. B≤V≤0,85*X*B.

In this way, the applied p.d. will always be equal to at least the threshold p.d. B sufficient to have the electrolysis on the single electrode E1 connected to the first pole, but will not exceed 85% of the p.d. necessary to have the electrolysis on the X electrodes connected to the second pole, as shown in section 4 above.

**6 - System for the reduction of bacterial populations by the propagation of electrical charges in the liquid with an electrolytic cell in alternating current**

Currently, the reduction of the bacterial load present in water-based fluids is obtained by thermal, chemical or mechanical means and each of these methods has characteristics and limitations that restrict its use to certain sectors of application. Bacterial reduction by chemical or thermal means is widely used industrially but induces important changes in the treated liquid and in any case such as to modify its organoleptic qualities. Mechanical reduction, where possible, is contraindicated at industrial level because of the scarce quantity of fluid it is able to treat.

To date there are no industrial systems to eliminate the bacterial component from the fluids by means of electrical energy alone, because in practice the electrical energy is used either to power UV lamps or to generate electrolytic transformations on the conductive elements so that they produce chemical compounds which then in turn act on the bacteria.

An experimental method to reduce microorganisms in liquids by means of electrical energy alone is called PEF (Pulsed Electric Field) and its operating principle is based on the theory of "definitive electroporation". This theory supposes that by placing a cell between two electrodes and subjecting it to a sufficiently intense electric field, an increasing "porosity" proportional to the applied electric field can be induced in its membrane, until at a certain point the porosity of the membrane is such that it breaks causing the death of the cell.

Electroporation is a theory proposed in 1967 to give an explanation to one of the methods normally used in microbiological research laboratories to insert biological material inside cells: a material external to the cell in order to be introduced therein must necessarily pass through the membrane, which must therefore have become sufficiently "porous" to let the material pass. PEF apparatuses bring the theory of electroporation to extreme consequences, assuming that by increasing the electric field between the electrodes with voltages up to tens of thousands of Volts it is possible to break the membrane causing the death of the cell.

Laboratory tests have given encouraging positive results about bacterial reduction but the method suffers, among others, from two serious interconnected problems: a) the useful life of the electronic components necessary to operate is minimal compared to the needs of the treatment; b) to obtain electroporation electrolysis is caused in the liquid. These two problems are deeply interconnected, so if you try to reduce electrolysis to a minimum using HIPEF (High Intensity Pulsed Electric Field) equipment, the result is a further increase in the degradation of the electronic components, and vice versa if you try to extend the useful life of the electronic components by reducing the electric field you get an increase in electrolysis, while if you physically separate the liquid from the electrodes you do not have electrolysis but you do not get any bacterial reduction.

It should also be noted that there is an important limit to the use of these methods, since in order to create the electric field between the electrodes they must necessarily be placed very close to each other, in the order of millimetres, and this situation leads to problems for the industrial use of the method as it places very high limits on the flow rates of the liquid to be treated. The advantage of being able to treat a food fluid like juice or milk is, however, so obvious that it justifies the continuous research of the scientific world on the PEF methodology.

Numerous experimental tests, both carried out directly by the inventor and reported in the scientific literature, however, show that even if the electric field between the electrodes is greatly increased, only a limited reduction of bacteria present between the electrodes is obtained. This experimental evidence clashes with the theory of electroporation, whose studies have provided several hypotheses, but none ever definitive, on how the electric field acts on the cell membrane to make it "porous".

Taking note of the experimental observations carried out and published in the past, it must be concluded that although the electric field can perhaps make the membrane of a cell "porous", it is not actually able to create the "mechanical" stress necessary to break it and thus obtain a total reduction of the bacterial population. It must then be taken into consideration that to create the electric field to which the cell must be subjected, it is necessary to use what is to all intents and purposes an electrolytic cell which, to a lesser or greater extent, necessarily causes electrolysis.

Therefore, from the point of view of logic, it would not be correct to say that the electric field is the cause of the porosity/breakage of the membrane if at the same time there is always another possible cause, namely electrolysis, since the two possible causes are inseparable. To verify if the electric field alone is able to kill the bacterial cells, electrolysis must be prevented, and for this reason the inventor has directly repeated experiments already published in the literature in which the electrodes are isolated from the liquid by a very thin layer of silicone. Even applying among the electrodes voltages higher than those of the published experiments, up to 50.000 Volts, the cell destruction obtained by the inventor was like the one reported in the literature, i.e. null.

Electrolysis is therefore indispensable to obtain a reduction of the bacterial charge, and in the light of the considerations set out here on the property of water to transport electric charges, it must be considered that a cell can suffer damage due to the presence and displacement in the liquid of the positive charges generated by electrolysis rather than due to the electrolytic reaction. In fact, the cell membrane has a porous and dynamic structure that also regulates the exchange of water and other molecules between the inside and the outside with an undoubtedly complex and in many ways still unknown operation.

It does not seem unreasonable to think that the delicate balances of cell membrane functioning such as rest potential, proton pumps, osmosis levels, ionic activators and so on, can be "jeopardised" by the constant presence of numerous positive electric charges that are concentrated outside the membrane and also tend to propagate inside it. The exact reasons why cells undergoing this treatment should die are not known to the inventor, but it has been found, with direct evidence using a device such as the one shown below, that a 90-second treatment is able to cause 99.9% reduction of the E. Coli bacterium.

The device object of the present invention therefore proposes to diffuse a high quantity of positive electric charges in a water-based ion solution populated by bacteria, without producing electrolysis at the electrodes, so that the charges propagated in the liquid cause the death of the bacterial population.

Consider the electrolytic cell of Fig.8 composed of an insulating container filled with an aqueous ion solution in which are immersed on one side an electrode E1 and on the other side two separate electrodes E2 and E3, equidistant from E1, all electrodes being substantially identical in shape, material and size. Connect electrode E1 to one pole of an alternating voltage generator and electrodes E2 and E3 to the other pole.

Apply now, with a frequency ≥ 1kHz, an alternating voltage (e.g. square wave) of a value much higher than the threshold value B that would be present if only electrodes E1 and E2 powered by a battery were present in the container, and increase the voltage and proportionally also the frequency until obtaining, for example, a current of 1 Ampere. In these conditions, it is immediately verified that there is no electrolysis but there is a passage of current between the electrodes, as occurs in the conductivity meters used to measure the specific electrical conductivity of a liquid. The $A_{total}$ current has a minimum or zero $A_{ions}$ component and the contribution to the total current is given almost exclusively by $A_{water}$.

The reason for this is as follows: during the first cycle of alternating voltage electrode E1 is positive while E2 and E3 are negative, therefore at the electrodes there is observed what has already been illustrated above: E1 becomes a generator of $M^+_{water}$ molecules that propagate by impact through all the liquid and reach E2 and E3 where they are neutralized. At the moment of startup, E1 creates the maximum electric field in its surroundings thus beginning to attract the negative ions which, however, as already mentioned, have to move in the liquid and therefore have a limited speed.

In the time it takes for the negative ions to approach E1 and before they can touch it, the voltage cycle on electrode E1 reverses so that E1 becomes negative and starts to repel the negative ions and attract the positive ones. Similarly, while the positive ions get closer to E1 the voltage reverses again and returns to the previous condition.

For electrodes E2 and E3 the same reasoning obviously applies, and in the light of what is illustrated in section 4 above, there is shown that the value of the current $A_{water}$ is greater using the two electrodes E2 and E3 rather than with a single electrode U of the same size as E1 or twice the size of E1.

In this way, throughout the liquid, $M_{water}^{+}$ molecules are always present and their number increases in proportion to the $A_{total}$ current, while electrochemical reactions are not activated on the electrodes because the ions are continuously rejected by the alternating electric field. This behaviour of alternating currents, used inadvertently for the realization of conductivity meters available on the market operating at frequencies > 300 Hz, is direct and irrefutable confirmation that the current circulation is not only due to the ionic transformations on the electrodes.

This reduction method is a radical innovation compared to the current state of the art and has several considerable advantages:

- the electrodes are not bound to distances of a few millimetres from each other and can be spaced according to the requirements of the industrial process device, so as to allow the continuous treatment of large quantities of liquid;
- it is possible to treat all the liquid in which the electrodes are immersed and not only the liquid between the electrodes;
- it is not required to generate intense electric fields between the electrodes and therefore the device can be made with electronic components of duration compatible with the industrial needs of the treatment;
- it does not generate electrolysis at the electrodes keeping the liquid unaltered.

These characteristics make the device usable for water sanitization, where for example UV lamps cannot act for water turbidity, and in the food sector for the reduction of bacterial load in water, juices, milk, etc. as an alternative to pasteurization.

The practical application of the device in the industrial environment requires to take into consideration some cases.

An electric current flows in the electrodes that heats the electrode by Joule effect. If the device were always left on, it could happen, especially in environments where the electrodes are immersed in "still" liquids, that as the temperature increases, bubbles form on the surface of the electrodes, which become larger and larger until the electrode reaches a temperature where the water in its immediate vicinity boils. The heat and boiling could generate unwanted and uncontrolled chemical reactions in the liquid to be treated, which should be avoided especially in the decantation tanks of large water purification plants that contain numerous compounds that could generate dangerous products. To resolve overheating of the electrodes it is advisable to use the device in an "intermittent" way alternating periods when it is on and periods when it is off so that the electrodes can cool down.

The intermittent operation is not only useful to avoid overheating of the electrodes but also has the precise purpose of improving bacterial reduction. In fact, in order to try to survive the constant presence of electrical charges crossing their membrane, bacteria use the natural biological process of adaptation to external stimuli: the alternation between present and absent stimulus determines a greater "stress" in the bacterium, reducing its ability to adapt and survive. In order to achieve the highest degree of bacterial reduction, it is then advisable to combine intermittent operation with a variation in the frequency value applied at each re-start of the device so that the consecutive stimuli that the bacterium must undergo are always different.

For constructive needs it could happen that electrodes E2 and E3 are positioned very close to each other. In this case, as the voltage V increases, an increasing electric field is formed between electrodes E2 and E3, which can influence the mobility and position of the ions in the immediate vicinity of these electrodes, and it could happen that the ion, under the effect of this electric field, may be able to approach and touch the electrode giving rise to an electrochemical reaction. To prevent this situation it is necessary that as V increases the alternation of the attraction and repulsion phases is faster so that the ion, although subject to a greater electric field, has less time to approach the electrode in the attraction phase. Similar reasonings are valid for the general case in which X electrodes are connected to the opposite pole to that to which E1 is connected.

Direct experience has shown that if voltage V is equal to or greater than B*X, i.e. V=B*Y with Y≥X, then the applied frequency must be ≥Y kHz.

**7 - Bactericidal system for the storage of liquids through the permanence of electrical charges generated by an electrolytic cell in alternating current**

If during the bactericide treatment illustrated in the previous point, a part of the liquid subjected to the propagation of electrical charges is collected in a hermetically sealed (and possibly vacuumed) insulating container, the positive charges that have been produced in excess and accumulated in the liquid itself that acts as a reservoir are also captured in the container, as explained at the end of section 3 above, and these charges can be stored indefinitely.

Since these charges have caused the reduction of the bacterial populations, it is also evident that their permanence in the liquid will also be able to hinder the subsequent proliferation of the few bacteria that may have survived and thus ensure the unaltered preservation of the liquid over time. Clearly, the bactericidal effect is a function of the quantity of charges present in the liquid which, however, once exposed to air, loses most of the charges in a few seconds.

The advantages of such a preservation system applied to food liquids such as juices, milk and the like are evident and numerous: the liquid is given a selfbactericidal property by using a non-polluting system, without chemical additives, which is not harmful to the body and does not alter the taste and flavour of the liquid.

In the case of fresh milk, it would be possible to market it without the need to preserve it in cooled storage, and you would have final dairy products of better quality if this new method of preservation was applied since the origin of the food chain. In fact, the way in which the first producer in the stable collects the milk and stores it before it is sent to the dairy consortium/factory is the critical element able to determine the quality of the final product.

## Claims

1.  Electrolytic cell including:

    - a container of non-conductive material suitable to contain a liquid formed by water and ionic compounds,
    - a first pole and a second pole,
    - a first electrode (E1) and a second electrode (E2) inserted inside said container and connected respectively to said first pole and said second pole, and
    - a generator capable of generating a potential difference (V) between said first and second poles equal to the threshold potential difference B necessary to start an electrolysis process, **characterized in that** it further includes at least a third electrode (E3) which is also inserted inside the container and connected to the second pole, so that X electrodes are connected only to said second pole and are all placed equidistant from the **only** electrode (E1) connected to the first pole, said X electrodes being substantially identical in shape, size and material, **in that** said generator is able to generate a potential difference (V) at least equal to X times said threshold potential difference B necessary to start an electrolysis process if only the first two electrodes (E1, E2) were present in the container, and is provided with a voltage regulator that allows the generated potential difference (V) to be adjusted at least over the entire range between B and X*B, and **in that** the generator is either a DC voltage generator, in which case X>2, or an AC voltage generator, in which case X≥2, operating at a frequency ≥1 kHz and with a waveform preferably selected from square, sinusoidal, triangular and sawtooth.

2.  Electrolytic cell according to claim 1, **characterized in that** the **only** electrode (E1) connected to the first pole is substantially identical to the other X electrodes connected to the second pole.

3.  Method for the use of an electrolytic cell according to claim 1 containing in said container of non-conductive material a liquid formed by water and ionic compounds, **characterized in that** the application of the potential difference (V) is intermittent and when the generator is an AC voltage generator the frequency can be varied between one application cycle and another.

4.  Method according to claim 3, **characterized in that** the generator generates a potential difference (V), in DC voltage, not greater than 0,85*X times the threshold potential difference B.

5.  Method according to claim 3, **characterized in that** the AC voltage generator generates a potential difference (V) equal in absolute value to Y times the threshold potential difference B, said potential difference (V) being applied at a frequency ≥Y kHz, where Y ≥ X.

6.  Method according to any of claims 3 to 5, **characterized in that** after the application of the potential difference (V) a part of the liquid is collected in an insulating container that is hermetically sealed and possibly under vacuum.

## Patentansprüche

1.  Elektrolytische Zelle, umfassend:

    - einen Behälter aus nichtleitendem Material, der dazu geeignet ist, eine Flüssigkeit aufzunehmen, die aus Wasser und ionischen Verbindungen besteht,
    - einen ersten Pol und einen zweiten Pol,
    - eine erste Elektrode (E1) und eine zweite Elektrode (E2), die in das Innere des besagten Behälters eingesetzt sind und an den besagten ersten Pol beziehungsweise an den besagten zweiten Pol angeschlossen sind, und
    - einen Generator, der in der Lage ist, zwischen dem besagten ersten und zweiten Pol eine Potentialdifferenz (V) zu erzeugen, die gleich dem Schwellenwert der Potentialdifferenz B ist, welche dazu erforderlich ist, um einen Elektrolyseprozess zu starten, **dadurch gekennzeichnet, dass** sie ferner wenigstens eine dritte Elektrode (E3) aufweist, die ebenfalls in das Innere des besagten Behälters eingesetzt ist und an den zweiten Pol angeschlossen ist, so dass X Elektroden nur an den besagten zweiten Pol angeschlossen sind und alle in gleichen Abständen zu der **einzigen** Elektrode (E1) angeordnet sind, die an dem ersten Pol angeschlossen ist, wobei die besagten X Elektroden hinsichtlich Gestalt, Größe und Material substantiell identisch sind,

**dadurch, dass** der besagte Generator in der Lage ist, eine Potentialdifferenz (V) zu erzeugen, die wenigstens gleich dem X-fachen des Schwellenwerts der Potentialdifferenz B ist, welche erforderlich ist, um einen Elektroseprozess zu starten, falls nur die ersten zwei Elektroden (E1, E2) im Behälter vorhanden wären, und der mit einem Spannungsregler versehen ist, der es erlaubt, die erzeugte Potentialdifferenz (V) wenigstens über den gesamten Bereich zwischen B und X*B einzustellen, und

**dadurch, dass** der Generator entweder ein Gleichspannungsgenerator ist, in welchem Fall X>2 ist, oder ein Wechselspannungsgenerator, in welchem Fall X≥2 ist, und der bei einer Frequenz ≥ 1 kHz arbeitet sowie mit einer Wellenform, die vorzugsweise ausgewählt aus Rechteck, Sinus, Dreieck und Sägezahn.

2. Elektrolytische Zelle gemäß Anspruch 1, **dadurch gekennzeichnet, dass** die **einzige** Elektrode (E1), welche an dem ersten Pol angeschlossen ist, substantiell identisch ist mit den anderen X Elektroden, welche an dem zweiten Pol anschlossen sind.

3. Verfahren zur Verwendung einer elektrolytischen Zelle gemäß Anspruch 1, die in dem besagten Behälter aus nichtleitendem Material eine Flüssigkeit enthält, die aus Wasser und ionischen Verbindungen besteht, **dadurch gekennzeichnet, dass** das Anlegen der Potentialdifferenz (V) intermittierend erfolgt, und falls der Generator ein Wechselspannungsgenerator ist, kann die Frequenz zwischen einem Anwendungszyklus und einem anderen variiert werden.

4. Verfahren gemäß Anspruch 3, **dadurch gekennzeichnet, dass** der Generator eine Potentialdifferenz (V) erzeugt, die hinsichtlich der Gleichspannung nicht größer ist als das 0,85*X-fache des Schwellenwertes der Potentialdifferenz B.

5. Verfahren gemäß Anspruch 3, **dadurch gekennzeichnet, dass** der Wechselspannungsgenerator eine Potentialdifferenz (V) erzeugt, die hinsichtlich des absoluten Wertes gleich dem Y-fachen des Schwellenwertes der Potentialdifferenz B ist, wobei die besagte Potentialdifferenz (V) bei einer Frequenz von ≥ Y kHz angelegt wird, mit Y ≥ X.

6. Verfahren gemäß einem der Ansprüche 3 bis 5, **dadurch gekennzeichnet, dass** nach dem Anlegen der Potentialdifferenz (V) ein Teil der Flüssigkeit in einem isolierten Behälter gesammelt wird, der hermetisch dicht ist und gegebenenfalls unter Vakuum steht.

**Revendications**

1. Cellule électrolytique incluant :

   - un contenant de matériau non conducteur approprié pour contenir un liquide formé d'eau et de composés ioniques,
   - un premier pôle et un second pôle,
   - une première électrode (E1) et une deuxième électrode (E2) insérées à l'intérieur dudit contenant et connectées respectivement audit premier pôle et audit second pôle, et
   - un générateur capable de générer une différence de potentiel (V) entre lesdits premier et second pôles égale au seuil de différence de potentiel B nécessaire pour démarrer un processus d'électrolyse,

   **caractérisée en ce qu'**elle inclut en outre au moins une troisième électrode (E3) qui est également insérée à l'intérieur du contenant et connectée au second pôle, de sorte que X électrodes soient connectées uniquement audit second pôle et soient toutes placées de manière équidistante par rapport à l'unique électrode (E1) connectée au premier pôle, lesdites X électrodes étant sensiblement identiques en termes de forme, de taille et de matériau,

   **en ce que** ledit générateur est apte à générer une différence de potentiel (V) au moins égale à X fois ledit seuil de différence de potentiel B nécessaire pour démarrer un processus d'électrolyse si uniquement les deux premières électrodes (E1, E2) étaient présentes dans le contenant, et est muni d'un régulateur de tension qui permet à la différence de potentiel (V) générée d'être ajustée au moins sur la totalité de la plage entre B et X*B, et

   **en ce que** le générateur est soit un générateur de tension continue, CC, auquel cas X > 2, soit un générateur de tension alternative, CA, auquel cas X ≥ 2, fonctionnant à une fréquence ≥ 1 kHz et avec une forme d'onde de préférence sélectionnée parmi carrée, sinusoïdale, triangulaire et en dents de scie.

2. Cellule électrolytique selon la revendication 1, **caractérisée en ce que** l'unique électrode (E1) connectée au premier pôle est sensiblement identique aux autres X électrodes connectées au second pôle.

3. Procédé pour l'utilisation d'une cellule électrolytique selon la revendication 1 contenant, dans ledit contenant de matériau non conducteur, un liquide formé d'eau et de composés ioniques, **caractérisé en ce que** l'application de la différence de potentiel (V) est intermittente et, lorsque le générateur est un générateur de tension CA, la fréquence peut être variée entre un cycle d'application et un autre.

4. Procédé selon la revendication 3, **caractérisé en ce que** le générateur génère une différence de potentiel (V), en tension CC, qui n'est pas supérieure à 0,85*X fois le seuil de différence de potentiel B.

5. Procédé selon la revendication 3, **caractérisé en ce que** le générateur de tension CA génère une différence de potentiel (V) égale en valeur absolue à Y fois le seuil de différence de potentiel B, ladite différence de potentiel (V) étant appliquée à une fréquence ≥ Y kHz, où Y ≥ X.

6. Procédé selon l'une quelconque des revendications 3 à 5, **caractérisé en ce que**, après l'application de la différence de potentiel (V), une partie du liquide est collectée dans un contenant isolant hermétiquement scellé et éventuellement sous vide.

Fig.1

Fig.2

Fig.3

Fig.4

Fig.5

Fig.6

Fig.7

Fig.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1597553 A
- US 2017058411 A